# FASCICULE DE BREVET EUROPEEN

(11) **EP 1 804 407 B1**
(45) Date de publication et mention de la délivrance du brevet: **11.02.2009**
(21) Numéro de dépôt: 05301116.9
(22) Date de dépôt: 28.12.2005
(51) Int. Cl.: H04J 14/02

(54) **Noeud d'accès pour réseau de transmission optique en anneau**
Accessknoten für optisches Ringnetzwerk
Acces node for optical ring network

(43) Date de publication de la demande: 04.07.2007
(73) Titulaire: Alcatel Lucent, 75008 Paris (FR)
(72) Inventeur: Dorgeuille, François, 75014, PARIS (FR); Le Sauze, Nicolas, 91440, Bures-Sur-Yvette (FR); Noirie, Ludovic, 91620, Nozay (FR); Beccia, Stefano, 20059, Vimercate (MI) (IT)
(74) Mandataire: Sciaux, Edmond

(56) Documents cités:
- EP-A- 0 949 777
- US-A1- 2002 181 503
- US-A1- 2004 264 966
- US-A1- 2005 025 489

## Description

L'invention se situe dans le domaine des réseaux de transmission à liaisons optiques. Elle concerne plus particulièrement les réseaux optiques adaptés à des dimensions géographiques relativement limitées, telles que les réseaux d'accès métropolitains.

D'une façon générale, un réseau optique est constitué d'une pluralité de stations susceptibles d'émettre et de recevoir des signaux optiques à destination et en provenance d'autres stations du réseau. Ces échanges d'informations s'effectuent au moyen de liaisons optiques auxquelles sont connectés des noeuds d'accès qui desservent respectivement ces stations.

Pour exploiter la capacité en bande passante des liaisons optiques, on utilise avantageusement le multiplexage en longueurs d'onde, habituellement appelé "WDM" (de l'anglais "Wavelength Division Multiplexing"). Ainsi, les liaisons optiques véhiculent des signaux multiplex formés d'une combinaison de signaux optiques constitués chacun d'une onde porteuse optique modulée en fonction de l'information à émettre. Chaque onde porteuse possède une longueur d'onde spécifique qui définit un canal spectral correspondant.

Par ailleurs, si le réseau est de taille suffisamment limitée, on peut éviter de prévoir des dispositifs de régénération individuelle des canaux. Un tel réseau qui est alors dit "transparent" peut toutefois comporter des amplificateurs optiques disposés pour amplifier simultanément les canaux des multiplex WDM transmis. En l'absence de tels amplificateurs, le réseau est qualifié de "passif".

Ainsi, l'invention se situe dans le domaine des réseaux transparent, passifs ou non.

Un premier type connu de réseau WDM transparent peut utiliser une configuration en anneau. Le réseau comporte alors par exemple une liaison optique dont une des extrémités est couplée à une interface d'émission d'un concentrateur ("hub" en anglais) et dont l'autre extrémité est couplée à une interface de réception de ce même concentrateur. Le concentrateur est aussi normalement prévu pour communiquer avec un réseau d'interconnexion externe.

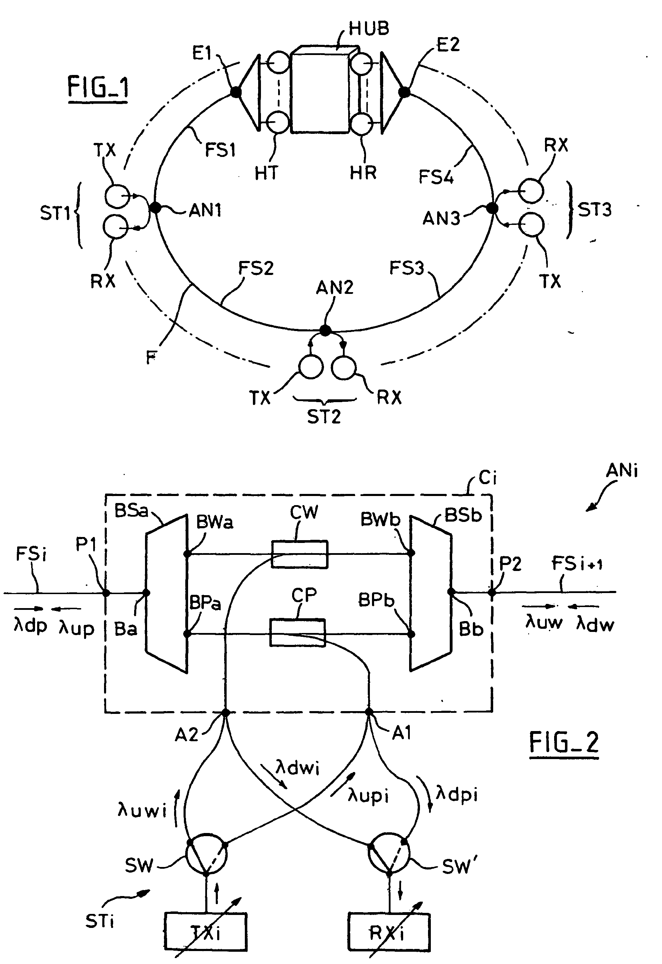

La figure 1 représente schématiquement un exemple de tel réseau dans le cas le plus simple où la liaison disposée en boucle est constituée d'une seule fibre F sur laquelle sont couplés des noeuds d'accès AN1-AN3 pour des terminaux récepteurs RX et émetteurs TX de stations associées ST1-ST3.

La liaison optique est donc constituée de plusieurs tronçons de fibre FS1-FS4 séparés par les noeuds (et éventuellement par des amplificateurs optiques non représentés). La liaison a une première extrémité E1, dite amont, reliée à l'interface d'émission HT du concentrateur HUB, et une deuxième extrémité E2, dite aval, reliée à l'interface de réception HR du concentrateur.

L'interface d'émission HT est munie de plusieurs émetteurs utilisant des ondes porteuses de différentes longueurs d'onde d'émission. D'autre part, chaque station comporte au moins un récepteur sélectif en longueur d'onde de réception. Ainsi, chaque émetteur du concentrateur peut injecter dans la liaison un signal de longueur d'onde donnée et lorsque ce signal atteint un noeud d'accès par l'intermédiaire de la fibre, ce signal peut être pris en compte par la station associée si elle comporte un récepteur accordé sur cette longueur d'onde.

Inversement, l'interface de réception HR du concentrateur est munie de plusieurs récepteurs sélectifs en longueurs d'onde de réception respectives, et chaque station comporte au moins un émetteur TX de longueur d'onde d'émission donnée. Ainsi, un émetteur d'une station peut injecter dans la liaison, en direction de la deuxième extrémité E2, un signal de longueur d'onde donnée et lorsque ce signal atteint l'interface de réception, il peut être pris en compte par le concentrateur grâce à un de ses récepteurs sensible à cette longueur d'onde. Etant donné que tous les signaux se propagent dans la liaison selon un même sens, il convient de prévoir des mesures pour éviter des interférences et des conflits au niveau des récepteurs. On peut par exemple imposer que toutes les longueurs d'onde d'émission du concentrateur et des stations soient toutes différentes entre elles. On peut aussi mettre en oeuvre un multiplexage temporel des signaux émis par plusieurs émetteurs et qui seraient portés par une même longueur d'onde. Chaque station pourra comporter un terminal récepteur et un terminal émetteur composés respectivement de plusieurs récepteurs et plusieurs émetteurs accordés sur plusieurs longueurs d'onde.

Les échanges d'informations entre stations s'effectuent par l'intermédiaire du concentrateur de la façon suivante. Chaque station émettrice envoi vers le concentrateur un signal porté par une des longueurs d'onde de réception du concentrateur. Ce signal contient une adresse indicative de la station destinataire. Après réception et conversion du signal sous forme électrique par le concentrateur, l'adresse destinataire est prise en compte par les moyens de gestion du réseau pour déterminer une longueur d'onde de réception de la station destinataire. Le signal est alors reconverti sous forme optique au moyen d'une onde porteuse ayant cette longueur d'onde et émis en tant que signal descendant.

L'ensemble des signaux issus du concentrateur constitue sur la liaison un trafic d'informations dit "descendant", et l'ensemble des signaux issus des stations constitue un trafic d'informations dit "montant".

Dans la réalisation montrée schématiquement à la figure 1, les noeuds ANi (avec i égal à 1, 2 ou 3 selon l'exemple représenté) sont constitués chacun d'un simple coupleur de type 2 vers 2. Chaque coupleur a une première entrée reliée au tronçon amont FSi, une première sortie reliée au tronçon aval FSi+1, une seconde entrée reliée aux émetteurs TX de la station associée et une seconde sortie reliée aux récepteurs RX de cette station. Dans la suite, ces premières entrée et sortie seront appelées premier et second "points de branchement" du noeud à la liaison, et ces secondes entrée et sortie seront appelées premier et second "points d'accès" de la station à la liaison.

Ainsi, deux tronçons adjacents FSi, FSi+1 sont couplés entre eux par une première voie du coupleur 2 vers 2, le tronçon amont FSi est couplé aux terminaux récepteurs RX par une seconde voie et les terminaux émetteurs TX sont couplés au tronçon aval FSi+1 par une troisième voie, ces trois voies permettant des couplages non sélectifs en longueurs d'onde.

Par conséquent, chaque station peut insérer dans le tronçon aval des signaux produits par un nombre variable d'émetteurs TX, accordés sur des longueurs d'onde quelconques. De même, pour la réception, chaque station peut prendre en compte un nombre variable de signaux en prévoyant un même nombre de photodétecteurs couplés en sorties de moyens de filtrage (ou de démultiplexage) des signaux reçus du tronçon amont. On peut donc faire évoluer facilement la capacité du réseau par ajout d'émetteurs et de photodétecteurs, sans perturber le trafic en transit par le noeud. On peut noter que plusieurs stations peuvent prendre en compte un même canal, ceci pour permettre la diffusion d'un même signal vers plusieurs récepteurs de stations différentes.

Cette réalisation permet une grande flexibilité pour choisir les longueurs d'onde d'émission et de réception.

Selon un second type de réseau voisin du précédent (non représenté), les trafics montant et descendant sont contra-directionnels, c'est-à-dire se propagent selon des sens opposés. Dans ce cas, les émetteurs et les récepteurs du concentrateur sont couplés à une même extrémité, par exemple E1, de la fibre, et pour le trafic descendant, chaque noeud ANi réalise la fonction d'un coupleur "1 vers 2" depuis le concentrateur, via l'extrémité E1 et les tronçons amont, vers le tronçon aval d'une part et vers le terminal récepteur de la station associée d'autre part. Inversement, pour le trafic montant des signaux issus du terminal émetteur vers le concentrateur, chaque noeud ANi réalise la fonction d'un coupleur "2 vers 1" dans le sens opposé, c'est-à-dire depuis les émetteurs des stations vers les récepteurs du concentrateur, via la même extrémité E1. On peut remarquer que les fonctions de couplage "1 vers 2" et "2 vers 1" mentionnées ci-dessus peuvent être réalisées comme dans la réalisation précédente au moyen d'un coupleur directionnel de type 2 vers 2 dont seulement trois ports sont utilisés, les émetteurs TX et récepteurs RX de la station associée étant reliés au même second point d'accès. On peut noter aussi que ce second type de réseau n'a plus une topologie physique en anneau mais en arbre. Dans ce second type de réseau, l'extrémité E2 n'est pas connectée au concentrateur. En effet, tous les émetteurs et récepteurs du concentrateur sont reliés à la même extrémité E1.

Comme dans la première réalisation, les noeuds réalisent des couplages non sélectifs en longueurs d'onde. Cette dernière réalisation présente donc les mêmes avantages en terme de flexibilité dans le choix des longueurs d'onde d'émission et de réception. Elle permet en outre l'utilisation de longueurs d'onde communes pour porter les trafics montant et descendant.

D'autre considérations doivent cependant être prises en compte dans la conception des réseaux, notamment celle des réseaux transparents et passifs.

Un aspect important dans le dimensionnement d'un réseau est le "budget en puissance", c'est-à-dire la prise en compte des puissances optiques minimales admissibles pour les photodétecteurs des récepteurs, et par conséquent les puissances en émission à prévoir et/ou les longueurs maximales possibles des liaisons entre émetteurs et récepteurs.

A cet égard, la dernière réalisation mentionnée présente l'avantage qu'elle rend possible d'optimiser le budget de puissance optique par un dimensionnement approprié des rapports de couplage des différents coupleurs 1 vers 2 constituant les noeuds du réseau. Par exemple, dans le cas d'un réseau sans amplification en ligne, le calcul des rapports de couplage optimisés peut être conduit de la façon suivante.

On prend comme puissance de réception minimale une valeur commune pour l'ensemble des récepteurs du réseau, cette valeur étant suffisamment élevée pour prendre en compte les dispersions des caractéristiques des photodétecteurs ainsi que les phénomènes de vieillissement. De même, les émetteurs dans un même réseau sont normalement choisis pour délivrer sensiblement une même puissance, ce qui permet aussi de définir une valeur nominale de puissance d'émission commune pour l'ensemble des émetteurs du réseau.

Dans ces conditions, pour un réseau ayant N noeuds par exemple, on choisira N coupleurs dont les N rapports de couplage ont des valeurs respectives telles que les différents chemins optiques séparant par l'intermédiaire de ces coupleurs les émetteurs et récepteurs du concentrateur des récepteurs et émetteurs des terminaux présentent des coefficients de transmission ayant sensiblement une même valeur commune. Ceci se traduit par N équations où les inconnues sont les N rapports de couplage et où les paramètres sont les coefficients de transmission des éléments constitutifs du réseau.

Comme les trafics montant et descendant empruntent les mêmes chemins, les rapports de couplage sont optimisés pour les deux trafics.

Une telle optimisation n'est par contre généralement pas possible dans le cas du premier réseau. En effet, sauf cas particulier, si on choisit des coupleurs dont les rapports de couplage sont optimisés pour le trafic descendant par exemple, les rapports de couplage pour le trafic montant sont alors fixés et généralement à des valeurs non optimales, et réciproquement.

Un autre aspect important dans la conception des réseaux a trait à la protection en cas de défaut ou de rupture de la liaison.

Dans le cas des topologies en anneau comme celle de la figure 1, des solutions connues se fondent sur l'utilisation d'une liaison constituée de plusieurs fibres optiques, lesquelles font partie normalement d'un même câble.

Selon une possibilité, on prévoit par exemple deux fibres dédiées respectivement aux trafics montant et descendant. Les émetteurs du concentrateur sont alors couplés chacun aux deux extrémités de la fibre dédiée au trafic descendant de façon à ce que les signaux descendants se propagent dans la fibre selon des sens opposés. De même, les émetteurs de chaque station sont couplés à la fibre dédiée au trafic montant en deux points de branchement tels que les signaux montants se propagent dans la fibre également selon des sens opposés.

On prévoit alors dans chaque station des moyens d'aiguillage des signaux reçus qui permettent de coupler sélectivement chaque récepteur à l'un ou l'autre des points de couplage de la station à la fibre dédiée au trafic descendant. De même le concentrateur est muni de moyens d'aiguillage des signaux reçus qui permettent de coupler sélectivement chacun de ses récepteurs à l'une ou l'autre des deux extrémités de la fibre dédiée au trafic montant.

Ainsi, en cas de coupure d'un tronçon de l'anneau, des commutations appropriées des moyens d'aiguillage permettent de maintenir les échanges de signaux entre le concentrateur et chaque station.

En variante, une autre solution consiste à doubler le réseau en dédiant une fibre au mode de fonctionnement normal, fibre dite "de travail", et l'autre fibre au mode de fonctionnement de protection, fibre dite "de protection".

On prévoit alors dans le concentrateur et chaque station des moyens d'aiguillage des signaux émis qui permettent de coupler sélectivement selon le mode de fonctionnement chaque émetteur à l'une ou l'autre des fibres. On prévoit de la même façon des moyens d'aiguillage des signaux reçus qui permettent de coupler sélectivement chaque récepteur à l'une ou l'autre des fibres.

Avantageusement, les deux réseaux sont chacun conformes au second type décrit précédemment, c'est-à-dire utilisent comme noeuds d'accès des coupleurs optimisés 2 vers 1 (ou 1 vers 2) disposés de façon à aiguiller des trafics montant et descendant bidirectionnels.

Etant donné que les fibres de travail et de protection appartiennent normalement à un même câble, une rupture se produisant sur un tronçon entraîne généralement une indisponibilité des deux fibres au niveau du même tronçon. Il conviendra donc que pour chaque station les coupleurs d'accès respectivement aux deux fibres soient disposés symétriquement. Ainsi, en mode de protection les trafics montant et descendant peuvent toujours se propager entre le concentrateur et chaque station en empruntant des tronçons de fibre non défectueux (sous réserve bien sûr qu'un seul tronçon soit défectueux).

Bien que ces solutions impliquant plusieurs fibres soient efficaces en terme de protection, elles entraînent un surcoût qu'il est souhaitable de pouvoir éviter.

Pour cela, on peut envisager un système de protection appliqué dans le cas d'une liaison à une seule fibre. Le principe est analogue au cas précédent, à l'exception de la commutation de couplage des signaux émis d'une fibre à l'autre. On est conduit à utiliser pour chaque station un noeud d'accès à la même fibre qui est constitué soit d'un seul coupleur 2 vers 2, soit de deux coupleurs 2 vers 1 disposés symétriquement.

Dans le premier cas, on retrouve la structure de couplage du réseau de la figure 1 avec l'inconvénient déjà signalé: il n'est généralement pas possible de dimensionner les coupleurs pour qu'ils présentent des rapports de couplage optimisés à la fois pour les trafics échangés entre chaque station et la première extrémité E1 de la fibre d'une part, et entre chaque station et la seconde extrémité E2 d'autre part. Le second cas présente le même inconvénient.

L'invention à pour but de proposer une solution qui permette la réalisation d'un réseau dans lequel on concilie des propriétés incompatibles avec les réseaux connus décrit ci-dessus, c'est-à-dire un réseau muni d'une liaison à une seule fibre, dans une configuration en anneau permettant une protection en cas de rupture en un point de la liaison, et dans lequel les accès des stations à la fibre utilisent des coupleurs ayant des rapports de couplage optimisés aussi bien en mode normal de fonctionnement qu'en mode de protection, c'est-à-dire à la fois pour les trafics échangés entre chaque station et la première extrémité E1 de la fibre d'une part, et entre chaque station et la seconde extrémité E2 d'autre part.

Dans ce but, l'invention a en premier lieu pour objet un noeuds d'accès pour réseau de transmission optique, comportant des premier et second points de branchement, des premier et second points d'accès, et un dispositif de couplage réalisant des couplages bidirectionnels respectivement entre:
- lesdits premiers points de branchement et d'accès,
- lesdits seconds points de branchement et d'accès, et
- lesdits premier et second points de branchement,
   caractérisé en ce que ledit dispositif de couplage comprend:
- des premier et second séparateurs spectraux, chaque séparateur spectral étant muni de premier, second et troisième ports, et réalisant pour des signaux optiques un couplage bidirectionnel entre son premier port et ledit second ou troisième ports sélectivement selon que ces signaux sont portés par des longueurs d'onde appartenant à une première ou une seconde bande spectrale,
- un premier coupleur couplant le second port du second séparateur spectral d'une part au second port du premier séparateur spectral par une première voie, et d'autre part audit second point d'accès par une seconde voie,
- un second coupleur couplant le troisième port du premier séparateur spectral d'une part au troisième port du second séparateur spectral par une première voie, et d'autre part audit premier point d'accès par une seconde voie.

Les première et seconde bandes spectrales mentionnées sont respectivement prévues pour inclure deux longueurs d'onde différentes, ou plus généralement pour contenir des premier et second ensembles disjoints de longueurs d'onde.

L'invention a aussi pour objet un réseau de transmission optique dont les noeuds d'accès sont conformes à la définition précédente. Plus précisément, le réseau comprend au moins une liaison à fibre optique subdivisée en plusieurs tronçons séparés par des noeuds d'accès pour des terminaux de stations associées, chaque noeud d'accès réalisant des couplages bidirectionnels entre deux tronçons adjacents et entre lesdits tronçons adjacents et au moins un terminal récepteur et/ou émetteur d'une station associée, des première et seconde extrémités de ladite liaison à fibre étant couplée respectivement à des première et seconde interfaces d'un concentrateur, caractérisé en ce que lesdits noeuds d'accès sont conformes au noeud selon l'invention, les premier et second points de branchement de chaque noeud d'accès étant couplés respectivement à des premier et second tronçons adjacents de ladite liaison optique, et ladite station associée étant couplé auxdits second et premier points d'accès.

Un tel réseau est particulièrement adapté à une optimisation du budget en puissance. Ainsi, le premier point de branchement de chaque noeud d'accès étant couplé à celui desdits tronçons adjacents qui est situé du côté de ladite première extrémité, lesdits premiers et seconds coupleurs des noeuds d'accès ont des rapports de couplage ayant des valeurs respectives telles que les différents chemins optiques séparant respectivement ladite seconde ou première extrémité de la liaison desdits terminaux par l'intermédiaire desdits premiers ou seconds coupleurs présentent des coefficients de transmission ayant des valeurs respectives prédéfinies.

Chacune de ces valeurs prédéfinies pour un chemin optique donné sera déterminée en fonction de valeurs connues des puissances optiques nominales de réception et d'émission caractéristiques respectivement des récepteurs et émetteurs placés aux deux extrémités du chemin optique. Cet aspect sera expliqué plus en détail ultérieurement.

Avantageusement, on prévoira que l'un au moins des premier et second coupleurs du dispositif de couplage est reconfigurable pour permettre des ajustements de son rapport de couplage. Cette disposition permet de tenir compte de changements éventuels de certaines caractéristiques du réseau (vieillissement des composants, insertion de nouveaux noeuds ou de terminaux etc.).

D'autres aspects et avantages du noeud d'accès et du réseau l'incorporant selon l'invention apparaîtront à la suite de la description en référence aux figures.
- La figure 1 commentée précédemment représente schématiquement un exemple de réseau optique en anneau selon l'état de la technique.
- La figure 2 représente un premier exemple de réalisation d'un noeud d'accès selon l'invention.
- La figure 3 représente un second exemple de réalisation d'un noeud d'accès selon l'invention, dans le cas où la station associée est située à distance des points de branchement du noeud à la liaison.

Un noeud d'accès ANi conforme à l'invention, associé à une station STi, est représenté à la figure 2. La station STi est schématisée par des terminaux émetteurs TXi et récepteurs RXi.

Le noeud est disposé entre deux tronçons adjacents FSi, FSi+1 d'une liaison à fibre optique F d'un réseau optique en anneau analogue à celui de la figure 1.

Comme déjà expliqué précédemment, le noeud d'accès comporte deux points de branchement prévus pour l'insérer entre les premier et second tronçons adjacents FSi, FSi+1 de la fibre. Le premier point de branchement P1 est couplé à une extrémité du tronçon FSi qui est situé par exemple du côté de la première extrémités E1 de la liaison F. Le second point de branchement P2 est alors couplé à une extrémité du tronçon FSi+1 situé du côté de la seconde extrémités E2 de la liaison F.

Le noeud comporte par ailleurs un premier point d'accès A1 et un second point d'accès A2 prévus pour être couplés aux terminaux émetteurs TXi et récepteurs RXi de la station.

Dans cette réalisation, le noeud d'accès est simplement constitué d'un dispositif de couplage Ci composé de premier et second séparateurs spectraux BSa, BSb, et de premier et second coupleurs CW et CP de type 2 vers 1 (ou 1 vers 2), disposés de façon particulière.

Chaque séparateur spectral BSa ou BSb est muni de premier, second et troisième ports, respectivement Ba, BWa, BPa pour BSa, et Bb, BWb, BPb pour BSb. Chaque séparateur réalise pour des signaux optiques un couplage bidirectionnel entre son premier port Ba, Bb et son second port BWa, BWb ou son troisième port BPa, BPb sélectivement selon que ces signaux sont portés par des longueurs d'onde appartenant à une première ou une seconde bande spectrale BW ou BP. Les séparateur spectraux réalisent donc chacun une même fonction de multiplexage/démultiplexage de deux bandes (au moins) de longueurs d'onde. Ils peuvent être réalisés de façon classique, par exemple au moyen d'un filtre conçu pour réfléchir une première bande BW et transmettre une seconde bande BP. On pourrait aussi utiliser des démultiplexeurs de bandes de longueurs d'onde, ces bandes pouvant être adjacentes ou composées de longueurs d'onde entrelacées.

Un premier coupleur CW ayant la fonction 1 vers 2 est disposé de façon à coupler le second port BWb du second séparateur spectral BSb d'une part au second port BWa du premier séparateur spectral BSa par une première voie, et d'autre part au second point d'accès A2 par une seconde voie. Un second coupleur CP ayant aussi la fonction 1 vers 2 est quant à lui disposé de façon à coupler le troisième port BPa du premier séparateur spectral BSa d'une part au troisième port BPb du second séparateur spectral BSb par une première voie, et d'autre part au premier point d'accès A1 par une seconde voie.

Les coupleurs CW et CP peuvent être des coupleurs directionnels de type 2 vers 2 classiques dont seulement trois ports sont utilisés.

Pour mettre en oeuvre le mécanisme de protection d'un réseau muni de noeuds d'accès tels que celui décrit ci-dessus, on définit deux modes de fonctionnement : un mode normal, dit "de travail", et un mode dit "de protection". La première bande spectrale BW et le premier coupleur CW par exemple sont affectés au mode de travail. La seconde bande spectrale BP et le second coupleur CP sont dans ce cas affectés au mode de protection.

On prévoit alors au moins une première longueur d'onde, dite "de travail", incluse dans la première bande spectrale BW, et au moins une autre longueur d'onde, dite "de protection", incluse dans la seconde bande spectrale BP.

Ainsi, pour permettre d'abord la protection du trafic montant, chaque terminal émetteur TXi de station est prévu pour produire des signaux montants portés par au moins une longueur d'onde de travail λuwi et par au moins une longueur d'onde de protection λupi.

Selon que le terminal est placé respectivement en mode de travail ou en mode de protection, chaque signal montant est porté respectivement par une longueur d'onde de travail λuwi ou une longueur d'onde de protection λupi et est injecté respectivement par le second point d'accès A2 ou par le premier point d'accès A1.

Le concentrateur est alors prévu pour détecter les signaux montants portés par les longueurs d'onde de travail qui sont reçus par sa seconde interface HR, et ceux portés par les longueurs d'onde de protection qui sont reçus par sa première interface HT.

Pour la mise en oeuvre pratique, on prévoit des terminaux émetteurs TXi de stations munis de sources laser permettant de créer des ondes porteuses ayant les longueurs d'onde de travail et de protection choisies. Pour cela, on peut par exemple utiliser des sources accordables en longueur d'onde. On prévoit par ailleurs des moyens d'aiguillage, tels que des commutateurs optiques spatiaux SW comme schématisé sur la figure 2, permettant de coupler sélectivement, selon le mode de fonctionnement, les signaux montants portés par les longueurs d'onde de travail λuwi ou ceux portés les longueurs d'onde de protection λupi respectivement au second point d'accès A2 ou au premier point d'accès A1.

Selon une variante (non représentée) fonctionnellement équivalente mais qui ne nécessite pas de commutateurs optiques spatiaux et offre davantage de flexibilité quant au nombre de longueurs d'onde d'émission utilisables, on peut prévoir une pluralité d'émetteurs dont une partie émettent avec des longueurs d'onde de travail et une autre partie émettent avec des longueurs d'onde de protection. Les émetteurs affectés aux longueurs d'onde de travail sont alors couplés au second point d'accès A2, avantageusement par l'intermédiaire d'un premier multiplexeur dédié au mode de travail. De la même façon, les émetteurs affectés aux longueurs d'onde de protection sont couplés premier point d'accès A1, par l'intermédiaire d'un second multiplexeur dédié au mode de protection. Dans cette réalisation, le terminal émetteur fonctionne en mode de travail ou en mode de protection selon que l'on active les émetteurs affectés aux longueurs d'onde de travail ou ceux affectés aux longueurs d'onde de protection.

Pour permettre la protection du trafic descendant, le concentrateur est prévu pour produire et émettre par sa seconde interface HR des signaux portés par au moins une longueur d'onde de travail λdwi, et par sa première interface HT des signaux portés par au moins une longueur d'onde de protection λdpi.

En l'absence de défaut sur la liaison, chaque signal descendant est porté par une longueur d'onde de travail λdwi et est couplé par la seconde interface HT à la seconde extrémité E2 de la liaison.

En cas de défaut en un point de la liaison, un signal descendant destiné à une station donnée sera toujours porté par une longueur d'onde de travail et émis par la seconde interface HR si le défaut n'est pas situé entre la seconde extrémité E2 et la station. Dans le cas contraire, le signal sera porté par une longueur d'onde de protection et émis par la première interface HT.

Au niveau des stations, la protection du trafic descendant implique que chaque terminal récepteur RXi soit prévu pour détecter des signaux portés par au moins une longueur d'onde de travail λdwi et au moins une longueur d'onde λdpi de protection, ces longueurs d'onde de travail et de protection faisant évidemment partie de celles que le concentrateur est prévu pour utiliser en émission.

En l'absence de défaut sur la liaison, chaque signal descendant provient du second point d'accès P2 et est porté par une longueur d'onde de travail λdwi. Il en est de même en cas de défaut, si le défaut n'est pas situé entre la seconde extrémité E2 et la station.

Si par contre le défaut est situé entre la seconde extrémité E2 et la station, chaque signal descendant provient du premier point d'accès P1 et est porté par une longueur d'onde de protection λdpi. Le terminal récepteur RXi est par conséquent placé en mode de protection de façon à détecter les signaux descendants reçus par le premier point d'accès P1.

Pour la mise en oeuvre pratique des terminaux récepteurs RXi, on peut prévoit pour chaque signal un photodétecteur associé à un filtre accordable permettant de transmettre sélectivement sa longueur d'onde de travail ou sa longueur d'onde de protection. Le filtre accordable (non représenté) est couplé aux deux points d'accès P1 et P2 par exemple par un coupleur 2 vers 1, ou sélectivement par un commutateur optique spatial SW' comme représenté.

Selon une variante (non représentée) fonctionnellement équivalente mais qui ne nécessite pas de filtres accordables, on peut aussi prévoir une pluralité de récepteurs dont une partie est formée de récepteurs accordés sur des longueurs d'onde de travail et une autre partie est formée de récepteurs accordés sur des longueurs d'onde de protection. Le second point d'accès A2 est alors couplé aux récepteurs affectés aux longueurs d'onde de travail par l'intermédiaire d'un premier démultiplexeur apte à séparer les longueurs d'onde de travail. De la même façon, le premier point d'accès A1 est couplé aux récepteurs affectés aux longueurs d'onde de protection par l'intermédiaire d'un second démultiplexeur apte à séparer les longueurs d'onde de protection. Dans cette réalisation, le terminal récepteur fonctionne en mode de travail ou en mode de protection selon que l'on active les récepteurs accordés sur les longueurs d'onde de travail ou ceux accordés sur les longueurs d'onde de protection.

On peut remarquer que cette réalisation est bien adaptée à la variante de réalisation du terminal émetteur mentionnée plus haut. En effet, les premier et second démultiplexeurs sont avantageusement les mêmes composants respectivement que les premier et second multiplexeurs dédié respectivement au mode de travail et de protection des émetteurs.

Grâce à la conception particulière du noeud d'accès selon l'invention où les valeurs des rapports de couplage des coupleurs CW et CP peuvent être choisies de façon indépendante, il est possible pour un réseau muni de tels noeuds d'accès d'appliquer à chacun des coupleurs les critères d'optimisation mentionnés précédemment.

Typiquement, les rapports de couplage des premiers coupleurs CW des différentes stations du réseau auront des valeurs respectives telles que les différents chemins optiques séparant respectivement la seconde extrémité E2 de la liaison F des terminaux émetteurs TXi et récepteurs RXi des stations par l'intermédiaire de ces premiers coupleurs CW présentent des coefficients de transmission ayant des valeurs respectives prédéfinies. De la même façon, les rapports de couplage des seconds coupleurs CP des différentes stations auront des valeurs respectives telles que les différents chemins optiques séparant respectivement la première extrémité E1 de la liaison F des terminaux émetteurs TXi et récepteurs RXi des stations par l'intermédiaire de ces seconds coupleurs CP présentent des coefficients de transmission ayant aussi des valeurs respectives prédéfinies.

Chacune de ces valeurs prédéfinies pour un chemin optique donné est déterminée en fonction de valeurs connues des puissances optiques nominales de réception et d'émission caractéristiques respectivement des récepteurs et émetteurs placés aux deux extrémités du chemin optique. En grandeurs linéaires, pour un chemin optique donné, le rapport de ces puissances correspond pour un sens de propagation donné à une première valeur minimale admissible de coefficient de transmission, et à une seconde valeur minimale admissible pour le sens de propagation opposé. Dans ce cas, la valeur prédéfinie de coefficient de transmission correspondant à ce chemin optique sera choisie supérieure et de préférence sensiblement égale à la plus grande de ces deux valeurs minimales. En appliquant cette règle, on optimise l'utilisation des ressources en puissance.

Dans le cas particulier assez courant où les puissances nominales de réception et d'émission ont des valeurs respectives communes, les valeurs respectives prédéfinies des coefficients de transmission auront sensiblement une même valeur commune.

Connaissant alors ces valeurs prédéfinies des coefficients de transmission, ainsi que les coefficients de transmission individuels des différents éléments constitutifs du réseau (autres que les coupleurs), on peut en déduire les valeurs optimales correspondantes des rapports de couplage des coupleurs. Il convient de noter que ces coefficients de transmission individuels peuvent être aussi bien des atténuations (coefficients inférieurs à 1) que des gains (coefficients supérieurs à 1) dans le cas où des amplificateurs feraient partie des chemins optiques.

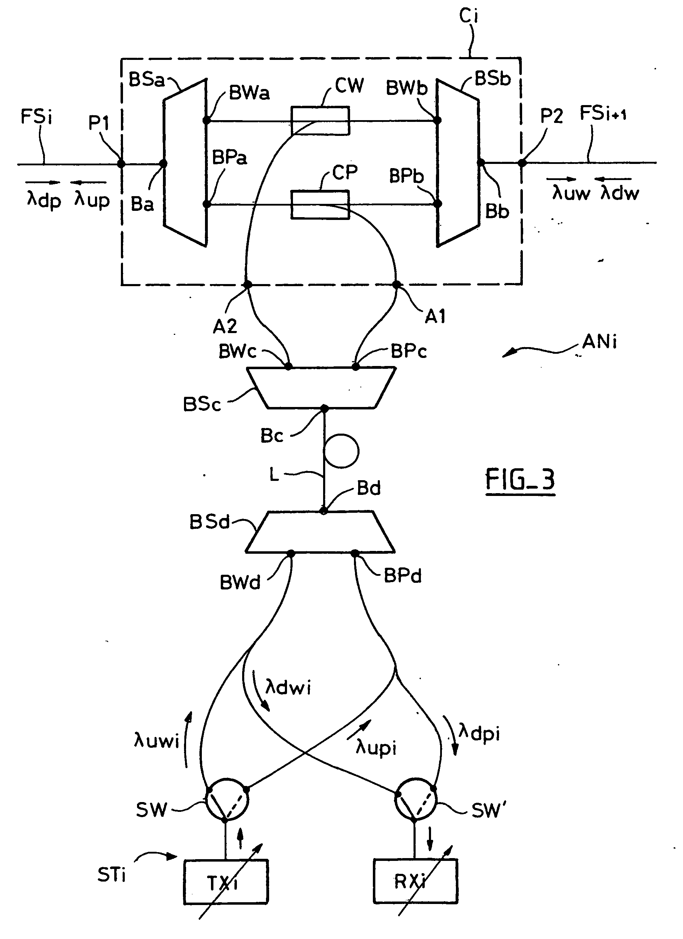

La figure 3 représente une variante de réalisation du noeud d'accès selon l'invention qui s'applique dans le cas où la station associée STi est située à distance des points de branchement P1, P2 du noeud à la liaison.

Le noeud comporte un dispositif de couplage Ci identique à celui de la réalisation précédente, ainsi qu'un troisième séparateur spectral BSc.

Le séparateur spectral BSc est analogue aux séparateurs spectraux BSa et BSb du dispositif de couplage Ci. Il est donc muni également de premier, second et troisième ports Bc, BWc, BPc et réalise aussi pour des signaux optiques un couplage bidirectionnel entre son premier port Bc et son second ou troisième ports BWc, BPc sélectivement selon que ces signaux sont portés par des longueurs d'onde appartenant à la première ou à la seconde bande spectrale. Ses second et troisième ports BWc, BPc sont par ailleurs couplés respectivement aux second et premier points d'accès A2, A1 du dispositif de couplage Ci.

Pour relier une station éloignée, schématisée ici par les terminaux RXi et TXi, on peut utiliser une fibre d'accès L et un quatrième séparateur spectral BSd identique aux trois précédents, avec aussi des premier, second et troisième ports, respectivement Bd, BWd, BPd. Une extrémité de la fibre L est couplée au premier port Bc du troisième séparateur spectral BSc, et l'autre extrémité de la fibre L est couplée au premier port Bd du quatrième séparateur spectral BSd.

Ainsi, vis-à-vis de la station STi les second et troisième ports BWd, BPd du séparateur spectral BSd jouent respectivement les même rôles que les second et premier points d'accès A2, A1 du noeud de la figure 2.

L'invention n'est pas limitée aux seuls modes de réalisation décrits ci-dessus. En particulier, l'invention peut s'appliquer aussi bien à des réseaux passifs qu'à des réseaux ayant des liaisons munies d'amplificateurs qui normalement devraient être bidirectionnels.

De même l'invention peut s'appliquer à des réseaux utilisant n'importe quel type de multiplexage en longueurs d'onde : le multiplexage dense, dit "DWDM" (de l'anglais "Dense Wavelength Division Multiplexing") ou bien le multiplexage "grossier" dit "CWDM" (de l'anglais "Coarse Wavelength Division Multiplexing").

## Revendications

1. Noeud d'accès (ANi) pour réseau de transmission optique, comportant un premier point de branchement et un second point de branchement (P1, P2), un premier point d'accès et un second point d'accès (A1, A2), et un dispositif de couplage (Ci) réalisant des couplages bidirectionnels respectivement entre :
- le premier point de branchement et le premier point d'accès (P1, A1),
- le second point de branchement et le second point d'accès (P2, A2), et
- le premier point de branchement et le second point de branchement (P1, P2),
**caractérisé en ce que** ledit dispositif de couplage (Ci) comprend :
- un premier séparateur spectral et un second séparateur spectral (BSa, BSb), chaque séparateur spectral étant muni d'un premier port, d'un second port et d'un troisième port (Ba, BWa, BPa; Bb, BWb, BPb), et réalisant pour des signaux optiques un couplage bidirectionnel entre son premier port (Ba, Bb) et ledit second ou troisième ports (BWa, BPa; BWb, BPb) sélectivement selon que ces signaux sont portés par des longueurs d'onde appartenant à une première ou une seconde bande spectrale,
- un premier coupleur (CW) couplant de manière bidirectionnelle le second port (BWb) du second séparateur spectral (BSb) d'une part au second port (BWa) du premier séparateur spectral (BSa) par une première voie, et d'autre part audit second point d'accès (A2) par une seconde voie, de sorte que le second point d'accès forme une entrée optique et une sortie optique du noeud d'accès,
- un second coupleur (CP) couplant de manière bidirectionnelle le troisième port (BPa) du premier séparateur spectral (BSa) d'une part au troisième port (BPb) du second séparateur spectral (BSb) par une première voie, et d'autre part audit premier point d'accès (A1) par une seconde voie, de sorte que le premier point d'accès forme une entrée optique et une sortie optique du noeud d'accès.

2. Noeuds d'accès selon la revendication 1, **caractérisé en ce que** l'un au moins desdits premier et second coupleurs (CW, CP) est reconfigurable pour permettre des ajustements de son rapport de couplage.

3. Noeuds d'accès selon l'une des revendications 1 ou 2, **caractérisé en ce qu'**il comporte un troisième séparateur spectral (BSc) analogue auxdits premier et second séparateurs spectraux. (BSa, BSb) et muni aussi de premier, second et troisième ports (Bc, BWc, BPc), ses second et troisième ports (BWc, BPc) étant couplés respectivement auxdits second et premier points d'accès (A2,.A1).

4. Réseau de transmission optique comprenant au moins une liaison à fibre optique (F) subdivisée en plusieurs tronçons (FS1-FS4) séparés par des noeuds d'accès (AN1-AN3) pour des terminaux (RX, TX) de stations associées (ST1-ST3); chaque noeud d'accès (ANi) réalisant des couplages bidirectionnels entre deux tronçons adjacents (FSi, FSi+1) et entre lesdits tronçons adjacents (FSi, FSi+1) et au moins un terminal récepteur et/ou émetteur (RXi, TXi) d'une station associée, des première et seconde extrémités (E1, E2) de ladite liaison à fibre étant couplée respectivement à des première et seconde interfaces (HT, HR) d'un concentrateur (HUB), **caractérisé en ce que** lesdits noeuds d'accès (AN1-AN3) sont conformes au noeud (ANi) selon l'une des revendications 1 à 3, les premier et second points de branchement (P1, P2) de chaque noeud d'accès étant couplés respectivement à des premier et second tronçons adjacents (FSi, FSi+1) de ladite liaison optique (F), et ladite station associée étant couplé auxdits second et premier points d'accès (A2, A1).

5. Réseau selon la revendication 4, **caractérisé en ce que** le premier point de branchement (P1) de chaque noeud d'accès (ANi) étant couplé à celui desdits tronçons adjacents (FSi) qui est situé du côté de ladite première extrémité (E1), lesdits premiers et seconds coupleurs (CW, CP) des noeud d'accès ont des rapports de couplage ayant des valeurs respectives telles que les différents chemins optiques séparant respectivement ladite seconde ou première extrémité (E2, E1) de la liaison (F) desdits terminaux (RXi, TXi) par l'intermédiaire desdits premiers ou seconds coupleurs présentent des coefficients de transmission ayant des valeurs respectives prédéfinies.

6. Réseau selon la revendication 5, **caractérisé en ce que** lesdites valeurs respectives prédéfinies des coefficients de transmission ont sensiblement une même valeur commune.

7. Réseau selon l'une des revendications 4 à 6, **caractérisé en ce qu'**une station au moins comporte un terminal émetteur (Txi) apte à produire des signaux portés par au moins une longueur d'onde (λuwi) dite "de travail" appartenant à ladite première bande spectrale et par au moins une longueur d'onde λupi) dite "de protection" appartenant à ladite seconde bande spectrale, et **en ce que** le concentrateur (HUIS) est apte à détecter des signaux reçus respectivement par ses seconde et première interfaces (HR, HT), et portés respectivement par lesdites longueurs d'onde de travail et de protection (λuwi, λupi) .

8. Réseau selon l'une des revendications 4 à 7, **caractérisé en ce qu'**une station au moins comporte un terminal récepteur (RXi) apte à détecter des signaux portés par au moins une longueur d'onde λdwi) dite "de travail" appartenant à ladite première bande spectrale et par au moins une longueur d'onde λdpi) dite iode protection" appartenant à ladite seconde bande spectrale, et **en ce que** le concentrateur (HUB) est apte à produire et émettre respectivement par ses seconde et première interfaces (HR, HT) des signaux portés respectivement par lesdites longueurs d'onde de travail et de protection (λdwi, λdpi).

## Claims

1. An access node (ANi) for an optical transmission network, comprising a first connection point and a second connection point (P1, P2), a first access point and a second access point (A1, A2), and a coupling device (Ci) performing bidirectional couplings between, respectively:
- the first connection point and the first access point (P1, A1),
- the second connection point and the second access point (P2, A2),
- the first connection point and the second connection point (P1, P2),
**characterized in that** said coupling device (Ci) comprises:
- a first spectral separator and a second spectral separator (BSa, BSb), each spectral separator being equipped with a first port, a second port, and a third port (Ba, Bwa, BPa; Bb, BWb, BPb), and performing, for optical signals, a bidirectional coupling between its first port (Ba, Bb) and said second or third ports (BWa, BPa; BWb, BPb) depending on whether these signals are carried by wavelengths belonging to a first or second spectral band,
- a first coupler (CW) bidirectionally coupling the second port (BWb) of the second spectral separator (BSb) both to the second port (BWa) of the first spectral separator (BSa) by a first channel, and to said second access point (A2) by a second channel, so that the second access point forms an access node optical input and optical output;
- a second coupler (CP) bidirectionally coupling the third port (BPa) of the first spectral separator (BSa) both to the third port (BPb) of the second spectral separator (BSb) by a first channel, and to said first access point (A1) by a second channel, so that the first access point forms an access node optical input and optical output.

2. An access node according to claim 1, **characterized in that** at least one of said first and second couplers (CW, CP) can be reconfigured to allow its coupling ratio to be adjusted.

3. An access node according to one of claims 1 or 2, **characterized in that** it comprises a third spectral separator (BSc) analogous to said first and second spectral separators (BSa, BSb) and also equipped with first, second, and third ports (Bc, BWc, BPc), its second and third ports (BWc, BPc) being respectively coupled to said second and first access points (A2, A1).

4. An optical transmission network comprising at least one optical fiber link (F) subdivided into multiple segments (FS1-FS4) separated by access nodes (AN1-AN3) for terminals (RX, TX) of associated stations (ST1-ST3), each access node (ANi) performing bidirectional couplings between two adjacent segments (FSi, FSi+1) and between said adjacent segments (FSi, FSi+1) and at least one receiving and/or sending terminal (RXi, TXi) of an associated station, first and second ends (E1, E2) of said fiber link being respectively coupled to first and second interfaces (HT, HR) of a hub (HUB), **characterized in that** said access nodes (AN1-AN3) conform to the node (ANi) according to one of the claims 1 to 3, the first and second connection points (P1, P2) of each access node being respectively coupled to first and second adjacent segments (FSi, FSi+1) of said optical link (F), and said associated station being coupled to said second and first access points (A2, A1).

5. A network according to claim 4, **characterized in that** the first connection point (P1) of each access node (ANi) being coupled to the first connection point (P1) of said adjacent segments (FSi) which is located beside said first end (E1), said first and second couplers (CW, CP) of the access nodes have coupling ratios having respective values such that the optical paths respectively separating said second or first end (E2, E1) of the link (F) of said terminals (RXi, TXi) by way of said first or second couplers exhibit transmission coefficients having predefined respective values.

6. A network according to claim 5, **characterized in that** said predefined respective values of transmission coefficients have approximately the same shared value.

7. A network according to one of the claims 4 to 6, **characterized in that** at least one station comprises a sending terminal (TXi) capable of producing signals carried by at least one wavelength (λuwi), a so-called "working wavelength" belonging to said first spectral band and by at least one wavelength (λupi), a so-called "protection wavelength" belonging to said second spectral band, and **in that** the hub (HUB) is capable of detecting signals respectively received by its second and first interfaces (HR, HT), and respectively carried by said working and protection wavelengths (λuwi, λupi).

8. A network according to one of the claims 4 to 7, **characterized in that** at least one station comprises a receiving terminal (RXi) capable of detecting signals carried by at least one wavelength (λwi), a so-called "working wavelength" belonging to said first spectral band and by at least one wavelength (,λdpi), a so-called "protection wavelength" belonging to said second spectral band, and **in that** the hub (HUB) is capable of respectively producing and sending, by its second and first interfaces (HR, HT), signals respectively carried by said working and protection wavelengths (λuwi, λupi).

## Patentansprüche

1. Zugangsknoten (Ani) für ein optisches Übertragungsnetzwerk, welcher einen ersten Verzweigungspunkt und einen zweiten Verzweigungspunkt (P1, P2), einen ersten Zugangspunkt und einen zweiten Zugangspunkt (A1, A2), und eine Kopplungsvorrichtung (Ci), welche bidirektionale Kopplungen jeweils zwischen:
- dem ersten Verzweigungspunkt und dem ersten Zugangspunkt (P1, A1),
- dem zweiten Verzweigungspunkt und dem zweiten Zugangspunkt (P2, A2), und
- dem ersten Verzweigungspunkt und dem zweiten Verzweigungspunkt (P1, P2) durchführt, umfasst,
**dadurch gekennzeichnet, dass** die besagte Kopplungsvorrichtung (Ci) umfasst:
- einen ersten Spektraltrenner und einen zweiten Spektraltrenner (BSa, BSb), wobei jeder Spektraltrenner mit einem ersten Port, einem zweiten Port und einem dritten Port (Ba, BWa, BPa; Bb, BWb, BPb) ausgestattet ist und für optische Signale eine bidirektionale Kopplung zwischen seinem ersten Port (Ba, Bb) und dem besagten zweiten oder dritten Port (BWa, BPa; BWb, BPb) durchführt, und zwar selektiv je nach dem, ob die diese Signale tragenden Wellenlängen einem ersten oder einem zweiten Spektralband angehören,
- einen ersten Koppler (CW), welcher den zweiten Port (BWb) des zweiten Spektraltrenners (BSb) bidirektional einerseits an den zweiten Port (BWa) des ersten Spektraltrenners (BSa) über einen ersten Kanal, und andererseits an den besagten zweiten Zugangspunkt (A2) über einen zweiten Kanal koppelt, so dass der zweite Zugangspunkt einen optischen Eingang und einen optischen Ausgang des Zugangsknotens bildet,
- einen zweiten Koppler (CP), welcher den dritten Port (BPa) des ersten Spektraltrenners (BSa) bidirektional einerseits an den dritten Port (BPb) des zweiten Spektraltrenners (BSb) über einen ersten Kanal, und andererseits an den besagten ersten Zugangspunkt (A1) über einen zweiten Kanal koppelt, so dass der erste Zugangspunkt einen optischen Eingang und einen optischen Ausgang des Zugangsknotens bildet.

2. Zugangsknoten nach Anspruch 1, **dadurch gekennzeichnet, dass** zumindest einer der besagten ersten und zweiten Koppler (CW, CP) rekonfigurierbar ist, um Anpassungen seines Kopplungsverhältnisses zu ermöglichen.

3. Zugangsknoten nach einem der Ansprüche 1 oder 2, **dadurch gekennzeichnet, dass** er einen dritten Spektraltrenner (BSc) umfasst, welcher den besagten ersten und zweiten Spektraltrennern (BSa, BSb) gleicht und ebenfalls mit einem ersten, einem zweiten und einem dritten Port (Bc, BWc, BPc) ausgestattet ist, wobei der zweite und der dritte Port (BWc, BPc) jeweils an den besagten zweiten und an den besagten ersten Zugangspunkt (A2, A1) gekoppelt ist.

4. Optisches Übertragungsnetzwerk, welches mindestens eine faseroptische Verbindung (F), die in mehrere, durch Zugangsknoten (AN1-AN3) getrennte Abschnitte (FS1-FS4) für Endgeräte (RX, TX) von assoziierten Stationen (ST1-ST3) unterteilt ist, umfasst, wobei jeder Zugangsknoten (ANi) bidirektionale Kopplungen zwischen zwei angrenzenden Abschnitten (FSi, FSi+1) und zwischen den besagten angrenzenden Abschnitten (FSi, FSi+1) und mindestens einem Empfangs- und/oder Sendeendgerät (RXi, TXi) einer assoziierten Station durchführt, wobei das erste und das zweite Ende (E1, E2) der besagten faseroptischen Verbindung jeweils an die erste und die zweite Schnittstelle (HR, HR) eines Netzwerkverteilers (HUB) gekoppelt ist, **dadurch gekennzeichnet, dass** die besagten Zugangsknoten (AN1-AN3) dem Knoten (Ani) gemäß einem der Ansprüche 1 bis 3 entsprechen, wobei der erste und der zweite Verzweigungspunkt (P1, P2) eines jeden Zugangsknotens jeweils an den ersten und an den zweiten angrenzenden Abschnitt (FSi, FSi+1) der besagten optischen Verbindung (F) gekoppelt ist, und die besagte assoziierte Station an den besagten zweiten und den besagten ersten Zugangspunkt (A2, A1) gekoppelt ist.

5. Netzwerk nach Anspruch 4, **dadurch gekennzeichnet, dass** der erste Verzweigungspunkt (P1) eines jeden Zugangsknotens (Ani) an den Verzweigungspunkt der besagten angrenzenden Abschnitte (FSi), welcher seitens des besagten ersten Endes (E1) angeordnet ist, gekoppelt wird, wobei der besagte erste und der besagte zweite Koppler (CW, CP) der Zugangsknoten Kopplungsverhältnisse aufweisen, welche gewährleisten, dass die verschiedenen optischen Pfade, welche jeweils das besagte zweite und das besagte erste Ende (E2, E1) von der Verbindung (F) der besagten Endgeräte (RXi, TXi) mittels des besagten ersten und des besagten zweiten Kopplers trennen, Übertragungskoeffizienten mit jeweils vorbestimmten Werten aufweisen.

6. Netzwerk nach Anspruch 5, **dadurch gekennzeichnet, dass** die besagten jeweiligen vorbestimmten Werte der Übertragungskoeffizienten in etwa einen selben gemeinsamen Wert haben.

7. Netzwerk nach einem der Ansprüche 4 bis 6, **dadurch gekennzeichnet, dass** zumindest eine Station ein Sendeendgerät (TXi) umfasst, welches fähig ist, Signale zu produzieren, die von mindestens einer sogenannten "Arbeits"-Wellenlänge (λuwi) des besagten ersten Spektralbandes sowie von mindestens einer sogenannten "Schutz"-Wellenlänge ((λupi) des besagten zweiten Spektralbandes getragen werden, und dass der Netzwerkverteiler (HUB) fähig ist, jeweils von seiner zweiten und seiner ersten Schnittstelle (HR, HT) empfangene und jeweils von der besagten Arbeits-Wellenlänge und der besagten Schutz-Wellenlänge (λuwi, λupi) getragene Signale zu erkennen.

8. Netzwerk nach einem der Ansprüche 4 bis 7, **dadurch gekennzeichnet, dass** zumindest eine Station ein Empfangsendgerät (RXi) umfasst, welches fähig ist, Signale zu erkennen, die von mindestens einer sogenannten "Arbeits"-Wellenlänge (λuwi) des besagten ersten Spektralbandes sowie von mindestens einer sogenannten "Schutz"-Wellenlänge ((λupi) des besagten zweiten Spektralbandes getragen werden, und dass der Netzwerkverteiler (HUB) fähig ist, Signale zu produzieren und jeweils über seine zweite und seine erste Schnittstelle (HR, HT) zu senden, welche jeweils von der besagten Arbeits-Wellenlänge und der besagten Schutz-Wellenlänge (λuwi, λupi) getragen werden.
